# EUROPÄISCHE PATENTSCHRIFT

(11) **EP 3 820 298 B1**
(45) Veröffentlichungstag und Bekanntmachung des Hinweises auf die Patenterteilung: **24.08.2022**
(21) Anmeldenummer: 19756090.7
(22) Anmeldetag: 11.07.2019
(51) Int. Cl.: A23C 20/02, A23L 11/00

(54) **UNGEKÜHLTER TOFU MIT VERLÄNGERTER HALTBARKEIT**
NON-REFRIGERATED TOFU WITH AN INCREASED SHELF LIFE
TOFU NON RÉFRIGÉRÉ À DURÉE DE CONSERVATION PROLONGÉE

(30) Priorität: 12.07.2018 AT 505982018
(43) Veröffentlichungstag der Anmeldung: 19.05.2021
(73) Patentinhaber: Feel Good Handel-GmbH, 2514 Traiskirchen (AT)
(72) Erfinder: ESCHNER, Andreas, 2500 Baden (AT); WEISS, Lukas, 2514 Traiskirchen (AT)
(74) Vertreter: Burger, Hannes
(86) Internationale Anmeldenummer: PCT/AT2019/060229
(87) Internationale Veröffentlichungsnummer: WO 2020/010378

(56) Entgegenhaltungen:
- CH-A2- 707 589
- CN-A- 107 771 960
- JP-A- S59 154 955
- US-A- 5 863 590
- DATABASE GNPD [Online] MINTEL; 26. September 2016 (2016-09-26), anonymous: "Smoked Tofu", XP055622017, gefunden im www.gnpd.com Database accession no. 4307323
- DATABASE GNPD [Online] MINTEL; 10. Januar 2017 (2017-01-10), anonymous: "Plain Tofu", XP055622019, gefunden im www.gnpd.com Database accession no. 4537625
- DATABASE GNPD [Online] MINTEL; 25. Mai 2017 (2017-05-25), anonymous: "Natural Tofu", XP055622020, gefunden im www.gnpd.com Database accession no. 4845661
- DATABASE GNPD [Online] MINTEL; 25. April 2018 (2018-04-25), anonymous: "Garlic Tofu", XP055622025, gefunden im www.gnpd.com Database accession no. 5620415
- Agatha Sapieja: "Implementation of a HACCP plan for blue-mould tofu with focus on microbila hazards", , 1. Januar 2017 (2017-01-01), Seiten 1-54, XP055622006, Gefunden im Internet: URL:https://stud.epsilon.slu.se/10477/1/sa pieja_a_171019.pdf [gefunden am 2019-09-13]

## Beschreibung

Die Erfindung betrifft einen Tofu gemäß Oberbegriff von Anspruch 1.

Darüber hinaus betrifft die Erfindung eine Anordnung umfassend einen Tofu und eine aus zumindest einer Verpackungsfolie aus Kunststoff gebildete Verpackung.

Tofu wird aus Sojamilch durch Eiweißgerinnung hergestellt. Entsprechende Herstellungsverfahren sind in großer Zahl bekannt geworden.

Um die Haltbarkeit eines Tofu zu erhöhen, ist es aus dem Stand der Technik bekannt geworden, diesen zu kühlen. Dies hat aber den Nachteil, dass für die gekühlte Aufbewahrung des Tofus eine entsprechende aufwendige Infrastruktur notwendig ist. Auch ist beim Transport des Tofu auf die Einhaltung einer Kühlkette zu achten, wodurch sich die Transportkosten und der Logistikaufwand erhöhen. Zudem kann das Risiko einer Unterbrechung nicht zur Gänze ausgeschaltet werden, dass es zu einer unsachgemäßen Lagerung zu einem Verderben des Tofu kommen kann.

Um die Haltbarkeit von Tofu auch im ungekühlten Zustand zu erhöhen ist es aus der AT 11 716 U2 bekannt geworden, den Tofu in einer Pasteurisieranlage unter Gegendruck zu erhitzen. Die Ansprüche an die ungekühlte Lagerfähigkeit und Haltbarkeit von Tofu haben sich in letzter Zeit jedoch wesentlich erhöht, nicht zuletzt deshalb, da Tofu als Eiweißquelle auch eine zunehmende Bedeutung in der Lagerhaltung für Krisensituationen gewinnt. Einschlägige Tofus sind unter den Bezeichnungen "Smoked Tofu", "Plain Tofu", "Natural Tofu" und "Garlic Tofu" sowie aus der JPS 59154955A, der US5863590, der CH707589A2 und der CN107771960A bekannt geworden.

Ein Problem bei der Herstellung von herkömmlichen Tofu, der einem Pasteurisieren unterzogen wird, besteht darin, dass durch Pasteurisieren die gewünschte Reduktion an Keimen nicht erzielt werden kann. Ein Sterilisieren wiederum kann eine starke Beeinträchtigung der Konsistenz bis hin zum des Zerfalls des Tofu zur Folge haben.

Aufgabe der vorliegenden Erfindung ist es, eine hohe Produktqualität des Tofu für einen sehr hohen Zeitraum zu gewährleisten.

Diese Aufgabe wird mit einem Tofu der eingangs genannten Art erfindungsgemäß durch die Merkmale des Anspruchs 1 gelöst.

Durch die erfindungsgemäße Lösung kann eine hohe Qualität des Tofu unabhängig von dessen Lagerung und der Einhaltung einer Kühlkette gewährleistet werden.

Gemäß einer bevorzugten Variante der Erfindung kann es vorgesehen sein, dass die Anzahl anaerober keimbildender Einheiten pro Gramm kleiner als 10, insbesondere kleiner als 5 ist.

Die Lagerfähigkeit lässt sich dadurch weiter erhöhen, dass er eine Dichte von 0,9 bis 1,9 g/cm³ aufweist.

Als besonders vorteilhaft hat sich auch herausgestellt, dass der Tofu einen pH-Wert zwischen 5,9 und 6,6 aufweist.

Gemäß einer bevorzugten Variante der Erfindung weist der Tofu einen Wasseraktivitätswert (aw-Wert) von größer oder gleich 0,95 auf.

Zudem kann der Tofu einen Wassergehalt von 70 - 82 % und einen Eiweißgehalt von 11 - 20 % aufweisen, wobei der Rest aus Fett und/oder Zusatzstoffen bestehen.

Die oben genannte Aufgabe lässt sich auch mit einem Tofu der eingangs genannten Art erfindungsgemäß dadurch lösen, dass der Tofu nach einem der Ansprüche 1 bis 8 ausgebildet ist und Ränder der Verpackungsfolie miteinander verschweißt und/oder verklebt sind, sodass im Inneren der Verpackung ein rundum geschlossener Hohlraum gebildet ist, wobei der Tofu in dem Hohlraum eingeschlossen ist.

Gemäß einer vorteilhaften Weiterentwicklung kann es vorgesehen sein, dass die zumindest eine Verpackungsfolie aus einem luftdichten Material gebildet ist.

Zum besseren Verständnis der Erfindung wird diese anhand der nachfolgenden Figur näher erläutert.

Es zeigt in stark vereinfachter, schematischer Darstellung:

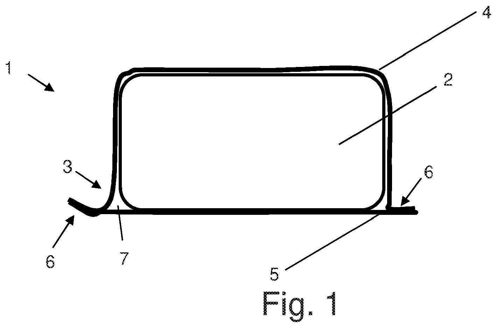

- Fig. 1: einen Schnitt durch eine erfindungsgemäße Anordnung umfassend einen erfindungsgemäßen Tofu und eine Verpackung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Fig. 1 zeigt eine Anordnung 1, welche einen erfindungsgemäßen Tofu 2 und eine Verpackung 3 aufweist. Die Verpackung 3 kann aus einer oder mehreren Folien 4, 5 gebildet sein. An einem Rand 6 sind die Folien 4 und 5 miteinander verschweißt und/oder verklebt, sodass ein geschlossener Hohlraum 7 gebildet ist, in welchem sich der Tofu 2 befindet. Vor einem Verschließen der Verpackung 3 kann der Hohlraum 7 mit dem darin befindlichen Tofu 2 evakuiert werden. Die Gesamtmasse der Anordnung 1 liegt bevorzugt zwischen 100 - 1.500 g.

Der Tofu 2 kann eine Dichte von 0,9 bis 1,9 g/cm³ aufweisen. Ein aus dem Tofu geschnittenere Würfel mit einer Kantenlänge von 10 mm kann einer Druckbelastung von 300g/80 mm² über einen Zeitraum von mindestens 2 Sekunden standhalten. Zudem kann der Tofu einen pH-Wert 5,9 und 6,6 und einen Wasseraktivitätswert (aw-Wert) von größer oder gleich 0,95 aufweisen.

Zudem kann der Tofu einen Wassergehalt von 70 - 82 % und einen Eiweißgehalt von 11 - 20 % aufweisen, wobei der Rest aus Fett und/oder Zusatzstoffen besteht. Als Zusatzstoffe können beispielsweise Gewürze, Früchte, Gemüse oder andere die optischen und geschmacklichen Eigenschaften des Tofus beeinflussenden Zutaten vorgesehen sein. Selbstverständlich kann der Tofu 2 auch ein ungewürzter Tofu sein.

Der Tofu 2 weist eine Anzahl keimbildender Einheiten pro Gramm kleiner als 20, insbesondere kleiner als 10, auf. Hierbei kann die Anzahl anaerober keimbildender Einheiten pro Gramm kleiner als 10, insbesondere kleiner als 5 sein. Darüber hinaus kann auch die Anzahl aerober keimbildender Einheiten pro Gramm kleiner als 10, insbesondere kleiner als 5 sein.

Ein Problem bei der Herstellung von herkömmlichen Tofu, der einem Pasteurisieren unterzogen wird, besteht darin, dass durch Pasteurisieren die gewünschte Reduktion an Keimen nicht erzielt werden kann. Ein Sterilisieren wiederum kann eine starke Beeinträchtigung der Konsistenz bis hin zum des Zerfalls des Tofu zur Folge haben.

In dem vorliegenden Zusammenhang kann daher zur Erzielung der gewünschten Eigenschaften des Tofu 2 ein Pseudosterilisieren des Tofu 2 bei einer Temperatur die über einer Pasteurisierungstemperatur und unter einer Sterilisierungstemperatur liegt, erfolgen.

Alternativ oder zusätzlich zu einer Wärmebehandlung kann der Tofu auch einer Strahlenbehandlung unterzogen werden. Hierzu kann der Tofu 2 einer ionisierenden Strahlung ausgesetzt werden. Bei der ionisierenden Strahlung kann es sich beispielsweise um Photonenstrahlung, Elektronenstrahlung, Bremsstrahlung oder Gammastrahlung, beispielsweise aus dem Zerfall von aus dem Zerfall von ⁶⁰Co oder ¹³⁷Cs, handeln. Als besonders bevorzugt hat sich eine Bestrahlungsstärke zwischen 0,66 im Fall von Gammastrahlung und 10 MeV im Fall von Elektronenstrahlung mit einer Bestrahlungsdauer von wenigen Sekunden im Fall von Elektronenstrahlung und mehreren Stunden im Fall von Gammastrahlung herausgestellt.

Bevorzugt erfolgt sowohl das Pseudosterilisieren als auch die Strahlenbehandlung in einem Zustand, in welchem der Tofu 2 bereits mit der Verpackung 3 verpackt ist. Anders gesagt wird die den Tofu 2 und die Verpackung 3 umfassende Anordnung 1 entweder der Wärmebehandlung oder der Bestrahlung unterzogen. An dieser Stelle sei jedoch darauf hingewiesen, dass sowohl eine Wärmebehandlung als auch eine Bestrahlung der Anordnung 1 in Kombination zum Einsatz kommen können.

Zur Bestimmung der Anzahl aerober und anaerober Sporenbildner bzw. der Keimbildenden Einheiten anaerober und aerober Sporenbildner sind dem Fachmann zahlreiche Methoden aus dem Stand der Technik bekannt. So können Beispielsweise die in VDLUVA Methodenbuch VI M.7.17.2. (1993) beschriebenen Standardmethoden zur Bestimmung aerober Sporenbildner und die in Methodenbuch VDLUVA VI M.7.18.2.1 (1996) beschriebenen Methoden zur Bestimmung anaerober Sporenbildner zum Einsatz kommen.

Beispielsweise kann ein Nachweis der aeroben keimbildenden Einheiten bzw. Sporenbildner durch Anreicherung einer aus einer Probemenge des Tofu 2, beispielsweise 10g, hergestellten Probelösung in einer Trypcase-Soja-Bouillon bei 30°C über 3 Tage und Überimpfung im Plattengussverfahren auf PCA-Agar und Bebrütung für 3 Tage bei 30°C auf TS Agar erfolgen. Die Auszählung der keimbildenden Einheiten kann mikroskopisch erfolgen. Der Nachweis aerober Sporenbildner kann beispielsweise aber auch durch Anreicherung und Erhitzung einer Probelösung auf 80°C für 10 min heiß halten, sowie Anreicherung der aus einer Probemenge des Tofu 2 hergestellten Probelösung auf einer Trypcase-Soja-Bouillon für 3 Tage bei 30°C und einer Bebrütung auf TS-Agar für 3 Tage bei 30°C. Auch hier kann eine Auszählung der keimbildenden Einheiten mikroskopisch erfolgen.

Zur Bestimmung der Anzahl anaerober Sporenbildner bzw. der entsprechenden keimbildenden Einheiten können eine Anreicherung einer aus einer dem Tofu 2 entnommenen Probemenge, beispielsweise 10g, hergestellten Probelösung in einer Thioglycolat-Bouillon mit Resazurin bei 30°C für 3 Tage und eine anschließende anaerobe Bebrütung auf TS-Agar bei 30°C für 3 Tage erfolgen. Die Auszählung der keimbildenden Einheiten kann wiederum mikroskopisch erfolgen.

Der Nachweis anaerober Sporenbildner kann aber auch durch Erhitzen der Probelösung auf 80°C für 10 min und anschließende Anreicherung in einer Thioglycolat-Bouillon mit Resazurin bei 30°C für 3 Tage sowie nachfolgender anaerober Bebrütung auf TS-Agar bei 30°C für 3 Tage mit einer mikroskopischen Auszählung der keimbildenden Einheiten erfolgen.

Die Probelösungen können bei allen oben erwähnten Verfahren nach MPN d.h. nach einem Titerverfahren als Verdünnungsreihen angesetzt sein.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Anordnung
- 2: Tofu
- 3: Verpackung
- 4: Folie
- 5: Folie
- 6: Rand
- 7: Hohlraum

## Patentansprüche

1. Ungekühlt lagerbarer Tofu (2), bei welchem die Anzahl keimbildender Einheiten pro Gramm kleiner als 20, insbesondere kleiner als 10, ist, wobei die Anzahl aerober keimbildender Einheiten pro Gramm kleiner als 10, insbesondere kleiner als 5 ist, **dadurch gekennzeichnet, dass** ein Würfel aus dem Tofu mit einer Kantenlänge von 10 mm einer Druckbelastung von 300g/80 mm² über einen Zeitraum von mindestens 2 Sekunden standhält, zur Erzielung der gewünschten Eigenschaften des Tofu (2) erfolgt ein Pseudosterilisieren des Tofu (2) bei einer Temperatur, die über einer Pasteurisierungstemperatur und unter einer Sterilisierungstemperatur liegt, alternativ oder zusätzlich zu einer Wärmebehandlung kann der Tofu (2) auch einer Strahlenbehandlung unterzogen werden.

2. Tofu nach Anspruch 1, **dadurch gekennzeichnet, dass** die Anzahl anaerober keimbildender Einheiten pro Gramm kleiner als 10, insbesondere kleiner als 5 ist.

3. Tofu nach einem der Ansprüche 1 oder 2, **dadurch gekennzeichnet, dass** er eine Dichte von 0,9 bis 1,9 g/cm³ aufweist.

4. Tofu nach einem der Ansprüche 1 bis 3, **dadurch gekennzeichnet, dass** er einen pH-Wert 5,9 und 6,6 aufweist.

5. Tofu nach einem der Ansprüche 1 bis 4, **dadurch gekennzeichnet, dass** er einen aw-Wert von größer oder gleich 0,95 aufweist.

6. Tofu nach einem der Ansprüche 1 bis 5, **dadurch gekennzeichnet, dass** er einen Wassergehalt von 70 - 82 % und einen Eiweißgehalt von 11 - 20 % aufweist, wobei der Rest aus Fett und/oder Zusatzstoffen besteht.

7. Anordnung (1) umfassend einen Tofu (2) und eine aus zumindest einer Verpackungsfolie (4, 5) aus Kunststoff gebildete Verpackung (3), **dadurch gekennzeichnet, dass** der Tofu (2) nach einem der Ansprüche 1 bis 6 ausgebildet ist, wobei zur Erzielung der gewünschten Eigenschaften des Tofu (2) ein Pseudosterilisieren des Tofu (2) bei einer Temperatur, die über einer Pasteurisierungstemperatur und unter einer Sterilisierungstemperatur liegt, erfolgt, alternativ oder zusätzlich zu einer Wärmebehandlung kann der Tofu (2) auch einer Strahlenbehandlung unterzogen werden, und Ränder der Verpackungsfolie (4, 5) miteinander verschweißt und/oder verklebt sind, sodass im Inneren der Verpackung (3) ein rundum geschlossener Hohlraum (7) gebildet ist, wobei der Tofu (2) in dem Hohlraum (7) eingeschlossen ist.

8. Anordnung nach Anspruch 7, **dadurch gekennzeichnet, dass** die zumindest eine Verpackungsfolie (4, 5) aus einem luftdichten Material gebildet ist.

## Claims

1. A tofu (2) which is storable without refrigeration in which the number of germ-forming units per gram is less than 20, in particular less than 10, wherein the number of aerobic germ-forming units per gram is less than 10, in particular less than 5, **characterized in that** a cube of the tofu having an edge length of 10 mm withstands a compressive load of 300g/80 mm² for a period of at least 2 seconds, in order to achieve the desired properties of the tofu (2), a pseudo-sterilization of the tofu (2) is performed at a temperature which is above a pasteurization temperature and below a sterilization temperature, alternatively or additionally to a heat treatment, the tofu (2) can also be subjected to a radiation treatment.

2. The tofu according to claim 1, **characterized in that** the number of anaerobic germ-forming units per gram is less than 10, in particular less than 5.

3. The tofu according to one of claims 1 or 2, **characterized in that** it has a density of 0.9 to 1.9 g/cm³.

4. The tofu according to one of claims 1 to 3, **characterized in that** it has a pH value of between 5.9 and 6.6.

5. The tofu according to one of claims 1 to 4, **characterized in that** it has an aw value of larger than or equal to 0.95.

6. The tofu according to one of claims 1 to 5, **characterized in that** it has a water content of 70-82% and a protein content of 11-20%, wherein the remainder consists of fat and/or additives.

7. An arrangement (1) comprising a tofu (2) and a packaging (3) formed by at least one packaging film (4, 5) of a plastic material, **characterized in that** the tofu (2) is embodied according to one of claims 1 to 6, wherein in order to achieve the desired properties of the tofu (2), a pseudo-sterilization of the tofu (2) is performed at a temperature which is above a pasteurization temperature and below a sterilization temperature, alternatively or additionally to a heat treatment, the tofu (2) can also be subjected to a radiation treatment, and edges of the packaging film (4, 5) are welded together and/or glued together, such that a cavity (7) closed all around is formed inside the packaging (3), wherein the tofu (2) is enclosed in the cavity (7).

8. The arrangement according to claim 7, **characterized in that** the at least one packaging film (4, 5) is formed of an airtight material.

## Revendications

1. Tofu stockable de manière non réfrigérée (2), dans lequel le nombre d'agents de nucléation par gramme est inférieur à 20, plus particulièrement inférieur à 10, dans lequel le nombre d'agents de nucléation aérobies par gramme est inférieur à 10, plus particulièrement inférieur à 5, **caractérisé en ce qu'**un cube de ce tofu avec une longueur d'arête de 10 mm résiste à une sollicitation en pression de 300g/80 mm² sur une période d'au moins 2 secondes, afin d'obtenir les propriétés souhaitées du tofu (2), a lieu une pseudo-stérilisation du tofu (2) à une température qui est supérieure à une température de pasteurisation et en dessous d'une température de stérilisation, en variante ou en plus d'un traitement thermique, le tofu (2) peut également être soumis à un traitement par rayonnements.

2. Tofu selon la revendication 1, **caractérisé en ce que** le nombre d'agents de nucléation anaérobies par gramme est inférieur à 10, plus particulièrement inférieur à 5.

3. Tofu selon l'une des revendications 1 ou 2, **caractérisé en ce qu'**il présente une masse volumique de 0,9 à 1,9 g/cm³.

4. Tofu selon l'une des revendications 1 à 3, **caractérisé en ce qu'**il présente une valeur de pH 5,9 et 6,6.

5. Tofu selon l'une des revendications 1 à 4, **caractérisé en ce qu'**il présente une valeur aw supérieure ou égale à 0,95.

6. Tofu selon l'une des revendications 1 à 5, **caractérisé en ce qu'**il présente une teneur en eau de 70 à 82 % et une teneur en protéines de 11 à 20 %, dans lequel le reste est constitué de graisse et/ou d'additifs.

7. Disposition (1) comprenant un tofu (2) et un emballage (3) constitué d'au moins un film d'emballage (4, 5) en matière plastique, **caractérisé en ce que** le tofu (2) selon l'une des revendications 1 à 6, dans lequel, afin d'obtenir les propriétés souhaitées du tofu (2), a lieu une pseudo-stérilisation du tofu (2) à une température qui est supérieure à une température de pasteurisation et en dessous d'une température de stérilisation, en variante ou en plus d'un traitement thermique, le tofu (2) peut également être soumis à un traitement par rayonnements et les bords du film d'emballage (4, 5) sont soudés et/ou collés entre eux, de façon à ce que, à l'intérieur de l'emballage (3), soit formé une cavité fermée (7), dans lequel le tofu (2) est inclus dans la cavité (7).

8. Disposition selon la revendication 7, **caractérisé en ce que** l'au moins un film d'emballage (4, 5) est constitué d'un matériau étanche à l'air.
